# EUROPÄISCHE PATENTSCHRIFT

(11) **EP 1 186 366 B1**
(45) Veröffentlichungstag und Bekanntmachung des Hinweises auf die Patenterteilung: **08.10.2003**
(21) Anmeldenummer: 01117914.0
(22) Anmeldetag: 24.07.2001
(51) Int. Cl.: B23B 51/10

(54) **Werkzeug und Verfahren zur spanenden Bearbeitung von Werkstücken**
Tool and method for machining work pieces
Outil et procédé pour l'usinage d'une pièce

(30) Priorität: 11.09.2000 DE 10044972
(43) Veröffentlichungstag der Anmeldung: 13.03.2002
(73) Patentinhaber: MAPAL Fabrik für Präzisionswerkzeuge Dr. Kress KG, D-73431 Aalen (DE)
(72) Erfinder:
(74) Vertreter: Gleiss, Alf-Olav, Dr.jur. Dipl.-Ing.

(56) Entgegenhaltungen:
- US-A- 3 675 536
- US-A- 3 940 214

## Beschreibung

Die Erfindung betrifft ein Werkzeug zur spanabtragenden Bearbeitung von Werkstücken gemäß Oberbegriff des Anspruchs 1 sowie ein Verfahren zur spanabtragenden Bearbeitung von Werkstücken gemäß Oberbegriff des Anspruchs 13. Ein solches Welkzeug und Verfahren wird z.B in US-A-3 940 214 beschrieben.

Werkzeuge und Verfahren der hier angesprochenen Art sind bekannt. Insbesondere in Bearbeitungszentren werden Werkzeuge verschiedenster Art eingesetzt, um Werkstücke einer spanabtragenden Bearbeitung zu unterwerfen. Es hat sich herausgestellt, dass dabei Grate entstehen, die zu einer nachhaltigen Verletzungsgefahr führen. Daher werden nach der spanabtragenden Bearbeitung von Werkstücken Entgratungswerkzeuge eingesetzt, um die entstandenen Grate zu entfernen und damit die Verletzungsgefahr möglichst zu beseitigen. Es bedarf also eines zweiten Werkzeugs, um die bei der spanabtragenden Bearbeitung entstandenen Grate abzutragen. Dadurch bedarf es in vielen Fällen eines Werkzeugwechsels. In Bearbeitungszentren ist dies aber ebenfalls ein großer Nachteil, weil durch die verschiedenen Werkzeuge ein großer Platzbedarf besteht. Aber auch allgemein ist die Bereitstellung derartiger Werkzeuge bezüglich der Lagerhaltung sehr nachteilig.

Es ist daher Aufgabe der Erfindung, ein Werkzeug zur spanabtragenden Bearbeitung von Werkstücken zu schaffen, das diese Nachteile nicht aufweist.

Zur Lösung dieser Aufgabe wird ein Werkzeug vorgeschlagen, das die in Anspruch 1 genannten Merkmale zeigt. Es zeichnet sich dadurch aus, dass es eine Entgratungseinrichtung umfasst. Mit deren Hilfe ist es möglich, die bei der spanabtragenden Bearbeitung entstehenden Grate zu beseitigen, ohne dass es also der Verwendung eines separaten Werkzeuges bedürfte.

Bevorzugt wird ein Ausführungsbeispiel des Werkzeuges, das sich dadurch auszeichnet, dass die Entgratungseinrichtung mit einer Betätigungseinrichtung zusammenwirkt, die eine Relativbewegung zwischen einem Entgratungswerkzeug und einer Schneide des Werkzeugs sicherstellt. Insbesondere ist es damit möglich, das Entgratungswerkzeug ein- und auszufahren, um nach einer spanabtragenden Bearbeitung eines Werkstücks mit eingezogenem Entgratungswerkzeug den entstanden Grat mittels des dann ausgefahrenen Werkzeugs zu beseitigen.

Weitere Ausgestaltungen ergeben sich aus den Unteransprüchen.

Zur Lösung der Aufgabe wird auch ein Verfahren zur spanabtragenden Bearbeitung von Werkstücken vorgeschlagen, das sich dadurch auszeichnet, dass mittels ein und desselben Werkzeugs sowohl die spanabtragende Bearbeitung als auch die Entgratung des Werkstücks erfolgt.

Weitere Ausführungsformen des Verfahrens ergeben sich aus den Unteransprüchen.

Die Erfindung wird im folgenden anhand der Zeichnung näher erläutert. Es zeigen:
- Figur 1: eine Prinzipskizze eines Werkzeugs in Draufsicht, nämlich dessen Stirnseite;
- Figur 2: eine Darstellung des Werkzeugs gemäß Figur 1 im Teilschnitt;
- Figur 3: einen Ausschnitt des Werkzeugs, nämlich eine Entgratungseinrichtung in einer ersten Funktionsstellung und
- Figur 4: die Entgratungseinrichtung in einer zweiten Funktionsstellung.

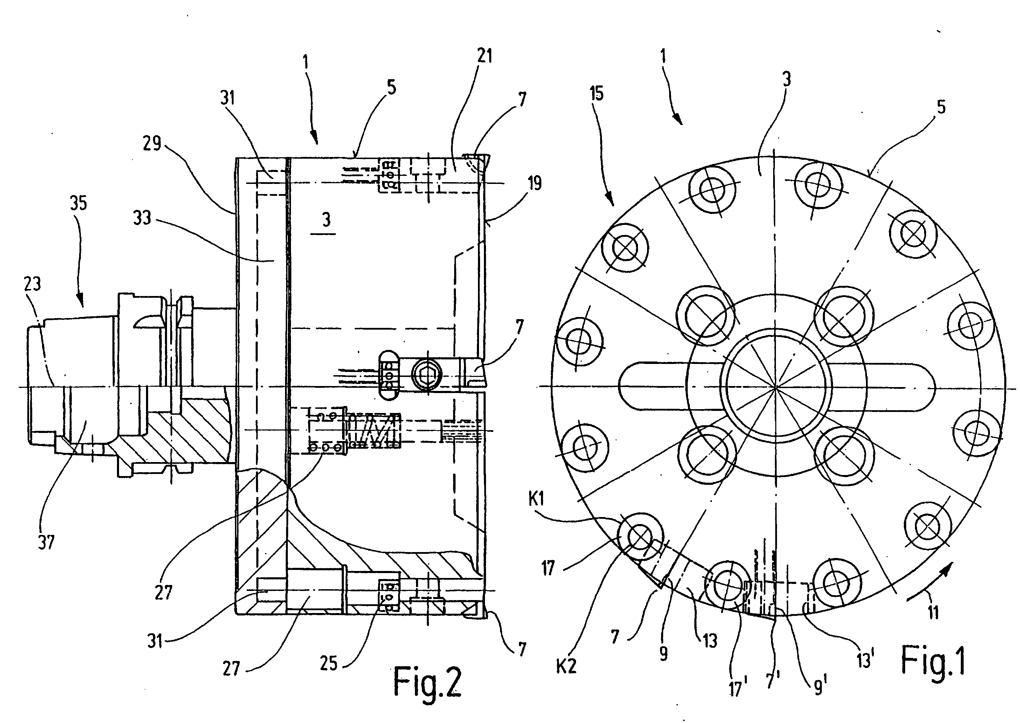

Aus Figur 1 ist erkennbar, dass das Werkzeug 1 einen Grundkörper 3 aufweist, über dessen Umfangsflächeche 5 mindestens eine Schneide 7 ragt. Bei der Darstellung gemäß Figur 1 sind zwei Schneiden 7 und 7' dargestellt. Die hier wiedergegebene Prinzipskizze ist jedoch vereinfacht. Es soll hier davon ausgegangen werden, dass insgesamt zwölf Schneiden über die Umfangsfläche 5 des Werkzeugs 1 ragen. Die Schneiden 7 sind hier Teil einer Messerplatte 9, die auf übliche Weise am Grundkörper 3 des Werkzeugs 1 befestigt ist, beispielsweise mittels einer hier nicht dargestellten Spannpratze und einer sogenannten Kassette, die vorzugsweise gegenüber dem Grundkörper 3 des Werkzeugs 1 so verstellbar ist, dass der sich einstellenden Bearbeitungsradius exakt eingestellt werden kann.

Bei der spanabtragenden Bearbeitung eines Werkstücks wird das Werkzeug 1 üblicherweise in Rotation versetzt, bei der Darstellung in Figur 1 entgegen dem Uhrzeigersinn, so dass die Schneiden 7 der Messerplatten 9 Späne von dem Werkstück abtragen können.

In der durch einen Pfeil 11 angedeuteten Drehrichtung des Werkzeugs 1 gesehen befindet sich jeweils vor einer Schneide 7, das heißt vor einer Messerplatte 9 ein Spanraum 13, 13', der der Spanabfuhr dient, in den also die von den Schneiden 7, 7' abgetragenen Späne gelangen und von dort abgeführt werden können.

Der Aufbau eines spanabtragenden Werkzeugs und dessen Funktion sind grundsätzlich bekannt, so dass hier nicht näher darauf eingegangen wird. Wesentlich ist also, dass bei einer Rotation des Werkzeugs mittels der Schneiden Späne von dem zu bearbeitenden Werkstück abgetragen werden. Dabei entstehen in der Regel Grate.

Das Werkzeug 1 ist mit einer Entgratungseinrichtung 15 versehen, die mindestens ein Entgratungswerkzeug 17 umfasst, die hier der Schneide 7 zugeordnet ist. Die Prinzipskizze gemäß Figur 1 lässt erkennen, dass auch der Schneide 7' ein Entgratungswerkzeug 17' zugeordnet und dass hier noch zehn weitere Entgratungswerkzeuge vorgesehen sind, die durch konzentrische Kreise K1, K2 angedeutet sind, auf die unten noch näher eingegangen wird. Jedem Entgratungswerkzeug ist damit auch eine Schneide zugeordnet beziehungsweise eine Messerplatte und umgekehrt, das heißt, das hier dargestellte Ausführungsbeispiel des Werkzeugs 1 weist ebenso viele Schneiden beziehungsweise Messerplatten wie Entgratungswerkzeuge auf. Anstelle der den einzelnen Schneiden zugeordneten einzelnen Entgratungswerkzeuge kann auch ein einziges, eventuell auch größeres Entgratungswerkzeug mehreren Schneiden zugeordnet werden.

Für die Funktion des Werkzeugs 1 ist grundsätzlich die Anzahl der Schneiden bzw. Messerplatten und der Entgratungswerkzeuge jedoch nicht entscheidend.

Figur 2 zeigt das in Figur 1 dargestellte Werkzeug in Seitenansicht, wobei Teile des Werkzeugs 1 geschnitten sind. Gleiche Teile sind mit bereits genannten Bezugsziffern versehen, so dass auf die in Figur 1 wiedergegebene Beschreibung verwiesen werden kann.

Die Darstellung gemäß Figur 2 zeigt mehrere über die Umfangsfläche 5 des Grundkörpers 3 des Werkzeugs 1 hinausragende Messerplatten 9 mit Schneiden 7, die auch über die Stirnseite 19 des Werkzeugs 1 hinausragen. Es ist ersichtlich, dass es sich bei dem hier dargestellten Werkzeug 1 beispielhaft um einen Planfräser handelt.

In Figur 2 sind die Kassetten 21 angedeutet, die am Grundkörper 3 des Werkzeugs 1 befestigt sind und an denen die Messerplatten 9 auf übliche Weise festgespannt sind. Die Kassetten sind hier in Richtung der Mittelachse 23 des Werkzeugs 1 verstellbar. Die Verstelleinrichtungen 25 sind bekannt und hier lediglich angedeutet. Sie dienen dazu, die Messerplatten 9 mehr oder weniger weit über die Stirnseite 19 des Werkzeugs 1 zu verlagern. Eine entsprechende Einstellbarkeit in radialer Richtung, also senkrecht zur Mittelachse, kann ebenfalls vorgesehen werden.

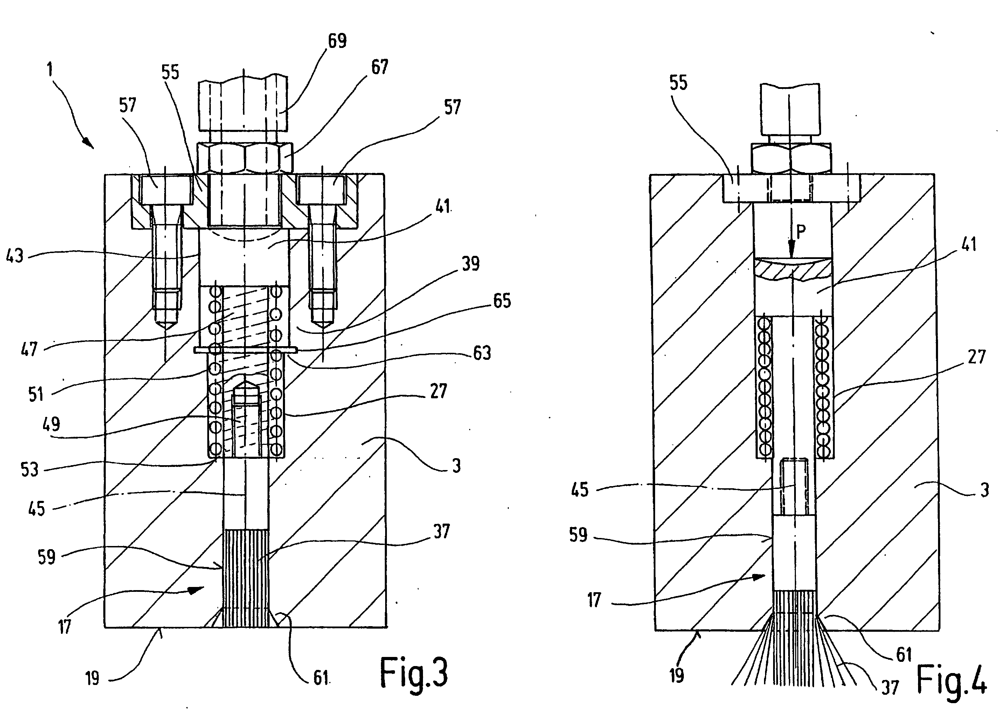

In den Grundkörper 3 des Werkzeugs 1 sind Ausnehmungen 27 eingebracht, die hier parallel zur Mittelachse 23 verlaufen und die der Aufnahme der Entgratungswerkzeuge 17 dienen, was unten anhand der Figuren 3 und 4 noch näher erläutert wird.

Auf seiner der Stirnseite 19 gegenüberliegenden Seite ist der Grundkörper 3 mit einem Flansch 29 versehen, der dicht auf den Grundkörper 3 aufgebracht ist und in Richtung der Mittelachse 23 verlaufende Stichkanäle 31 umfasst, die beispielsweise über einen oder mehrere Ringkanäle 33 miteinander und mit den Ausnehmungen 27 in Medienverbindung stehen.

Das Werkzeug 1 ist über den Flansch 29 und über ein bekannten Befestigungsschaft 35 mit einer Werkzeugmaschine beziehungsweise einer Bearbeitungsstation verbindbar. Die Teilschnittdarstellung gemäß Figur 2 lässt erkennen, dass der Befestigungsschaft hohl ist und einen Innenraum 37 aufweist, über den einerseits eine Medienverbindung zum Ringkanal 33, zu den Stichkanälen 31 und den Ausnehmungen 27 geschaffen wird und andererseits ein Kühl- und Schmiermittel zu den Schneiden gefördert werden kann.

Es ist grundsätzlich bekannt, über einen Schaft Werkzeuge mit Kühl- und/oder Schmiermittel beziehungsweise mit sonstigen Medien zu versorgen, so dass hierauf nicht näher eingegangen wird.

Figur 3 zeigt stark vergrößert einen Teil des Werkzeugs 1 in Schnitt, nämlich ein Entgratungswerkzeug 17. In den Grundkörper 3 ist also eine Ausnehmung 27 eingebracht, die hier als Stufenbohrung ausgebildet ist und das als Drahtbürste 37 ausgebildete Entgratungswerkzeug 17 sowie eine Betätigungseinrichtung 39 aufnimmt. Diese umfasst einen Betätigungskolben 41, der dichtend im oberen Bereich 43 der Ausnehmung 27 angeordnet und in Richtung der Längsachse 45 der Ausnehmung 27 verlagerbar ist. An der Unterseite des Betätigungskolbens 41, die der Stirnseite 19 des Werkzeugs 1 zugewandt ist, ist ein Betätigungsstift 47 angebracht, an dem die Drahtbüste 37 befestigt, hier beispielhaft mittels eines Gewindestifts 49 angeschraubt ist. Der Außendurchmesser des Betätigungsstifts 47 ist kleiner als der Innendurchmesser der Ausnehmung 27, so dass um den Betätigungsstift herum ein elastisches Element, hier eine Schraubenfeder 51 angeordnet werden kann, die sich einerseits an einer unteren Stufe der Ausnehmung 27 und andererseits an der Unterseite des Betätigungskolbens 41 abstützt und unter einer vorspannung in der Ausnehmung 27 untergebracht ist. Die Schraubenfeder 51 drückt also den Betätigungskolben 41 nach oben, der sich an einen geeigneten Widerlager, hier an einer Verschlussplatte 55 abstützt. Diese ist hier in den Grundkörper 3 des Werkzeugs 1 eingelassen und mit Hilfe von Befestigungsschrauben 57 fixiert.

In der Darstellung gemäß Figur 3 befindet sich der Betätigungskolben 41 in seiner oberen ersten Funktionsstellung, nämlich am Anschlag an der Verschlussplatte 55, so dass die Entgratungseinrichtung 15 beziehungsweise das Entgratungswerkzeug 17 inaktiviert ist: Die Drahtbürste 37 ist vollständig in den unteren Teil 59 der Ausnehmung 27 eingezogen und ragt nicht über die Stirnseite 19 des Werkzeugs 1 hinaus

Figur 3 lässt erkennen, dass der Mündungsbereich des unteren Teils 59 in der Stirnseite 19 mit einer konischen Aufweitung 61 versehen ist, was in Figur 1 durch konzentrische Kreise K1 und K2 angedeutet ist.

Wird der Betätigungskolben 41 aus der in Figur 3 dargestellten Position entgegen der Kraft der Schraubenfeder 51 nach unten in seine zweite Funktionsstellung verlagert, so schlägt er schließlich an einer oberen Stufe 63 der Ausnehmung 27 an, beziehungsweise an einen Anschlagring 65, der in die Ausnehmung 27 eingebracht und konzentrisch zur Längsachse 45 angeordnet ist.

An der Verschlussplatte 55 ist ein Anschlussstutzen 67 angebracht, über den die Ausnehmung 27 über einen Anschlussschlauch 69 mit einer Medienversorgung in Verbindung steht. Es ist also möglich, auf der der Stirnseite 19 abgewandten Oberseite des Betätigungskolbens 41 einen Überdruck aufzubauen, beispielsweise mittels Druckluft oder einer Hydraulikflüssigkeit, um eine nach unten gerichtete Kraft aufzubauen, die schließlich größer ist als die Gegenkraft der Schraubenfeder 51. Auf diese Weise kann der Betätigungskolben 41, damit auch der Betätigungsstift 47 und das Entgratungswerkzeug 17, das heißt die Drahtbürste 37, nach unten verlagert werden.

Figur 4 zeigt den nach unten verlagerten Betätigungskolben 41 und damit das über die Stirnseite 19 ausgefahrene Entgratungswerkzeug 17 beziehungsweise die Drahtbürste 37. Aufgrund der Aufweitung 61 kann sich die Drahtbürste 37 auffächern, wie dies in Figur 4 dargestellt ist.

Figur 4 zeigt ein gegenüber Figur 3 leicht abgewandeltes Ausführungsbeispiel: Die Verschlussplatte 55 ist hier etwas kleiner ausgebildet. Jedoch ist der grundsätzliche Aufbau des Entgratungswerkzeugs 17 und der Betätigungseinrichtung 39 gleich, so dass auf die Beschreibung von Figur 3 und die übrigen Figuren verwiesen werden kann. Dabei sind übereinstimmende Teile mit gleichen Bezugsziffern versehen.

Die Darstellung gemäß Figur 4 lässt erkennen, dass auf die obere Stufe 63 und auf den Anschlagring 65 verzichtet werden kann. Die nach unten gerichtete Bewegung des Betätigungskolbens 41 wird dadurch begrenzt, dass die Schraubenfeder 51 auf Block zusammengeschoben wurde, so dass alle Windungen aufeinander liegen und eine weitere Kompression nicht möglich ist.

Für die nach unten gerichtete Bewegung des Betätigungskolbens 41, des Betätigungsstifts 57 und des Entgratungswerkzeugs 17 beziehungsweise der Drahtbürste 37 ist es bei der hier dargestellten Ausführungsform der Betätigungseinrichtung 39 entscheidend, dass der Betätigungskolben 41 auf seiner Oberseite mit einer Druckkraft P beaufschlagt wird, die größer ist als die Gegenkraft der Schraubenfeder 51. Daraufhin wird das Entgratungswerkzeug 17 über die Stirnseite 19 des Werkzeugs 1 ausgefahren und steht für Entgratungsarbeiten zur Verfügung.

Es wird ohne weiteres deutlich, dass es zum Aufbau der Druckkraft keine Rolle spielt, ob die Ausnehmung 27 oberhalb des Betätigungskolbens 41 über einen Anschlussstutzen 67, wie er in den Figuren 3 und 4 dargestellt ist, mit einem unter Druck stehenden Medium beaufschlagt wird, oder über einen Flansch 29, der in Figur 2 erläutert wurde. Wird nämlich der Ringkanal 33 mit einem unter Druck stehenden Medium beaufschlagt, so wird in den Stichkanälen 31 ebenfalls Druck aufgebaut. Dieser setzt sich dann auf die der Stirnseite 19 abgewandte Oberseite des Betätigungskolbens 41 fort, so dass dieser schließlich gegen die Kraft der Schraubenfeder 51 verlagert wird, so dass das Entgratungswerkzeug 17 aus dem Grundkörper 3 des Werkzeugs 1 ausgefahren wird.

Entscheidend ist es also, dass bei dem hier dargestellten Ausführungsbeispiel der Betätigungseinrichtung 39 der Betätigungskolben 41 gezielt mit einer Druckkraft beaufschlagt werden kann, sei es durch ein gasförmiges oder durch ein flüssiges Medium, um die Entgratungseinrichtung 15 zu aktivieren und das Entgratungswerkzeug 17, also die Drahtbürste 37, über die Stirnseite 19 des Werkzeugs 1 gegen die Kraft einer Rückstelleinrichtung, die beispielsweise die Schraubenfeder 51 umfasst, auszuschieben.

Wird der Druck, der auf die Oberseite des Betätigungskolbens 41 wirkt, reduziert, so drückt die Schraubenfeder 51 schließlich den Betätigungskolben, damit auch das Entgratungswerkzeug 17 zurück in die Ausgangsposition: Die Drahtbürste 37 wird damit wieder in den Grundkörper 3 des Werkzeugs 1 zurückverlagert.

Im Folgenden wird auf die Funktion des Werkzeugs und auf das Verfahren zur spanabtragenden Bearbeitung von Werkstücken näher eingegangen:

Das Werkzeug 1 wird zunächst in einem ersten Bearbeitungsschritt dazu verwendet, Späne von einem Werkstück abzutragen. Dabei spielt es letztlich keine Rolle, ob es sich, wie anhand der Figuren 1 und 2 ersichtlich, bei dem Werkzeug 1 um einen Fräser oder um ein sonstiges der spanabtragenden Bearbeitung dienendes Werkzeug handelt, beispielsweise um eine Reibahle oder dergleichen. Bei der spanabtragenden Bearbeitung stehen die Schneiden 7 über die Umfangsfläche 5 und gegebenenfalls über die Stirnseite 19 des Grundkörpers 3 des Werkzeugs 1 über und können Späne von dem Werkstück abtragen. Bei dieser Funktionsweise des Werkzeugs 1 ist die Entgratungseinrichtung 15 inaktiviert, das heißt, das Entgratungswerkzeug 17 beziehungsweise die Drahtbürste 37 ist in den Grundkörper 3 eingezogen. Nach der spanabtragenden Bearbeitung wird das Werkzeug 1 von dem zu bearbeitenden Werkstück abgehoben und in seine Ausgangslage zurückverfahren. Nun wird die Entgratungseinrichtung 15 aktiviert, das heißt, das hier als Drahtbürste 37 ausgebildete Entgratungswerkzeug 17 wird aus dem Grundkörper 3 des Werkzeugs 1 so ausgefahren, dass in einem weiteren Verfahrensschritt die Oberfläche des Werkstücks mit dem Entgratungswerkzeug 17 bearbeitet werden kann.

Entscheidend sind die folgenden Gesichtspunkte:

In einem ersten Verfahrensschritt wird das Werkstück mittels des Werkzeugs 1 einer spanabtragenden Bearbeitung unterworfen. In einem zweiten Bearbeitungsschritt erfolgt unmittelbar mit ein und demselben Werkzeug die Entgratung des Werkstücks. Dazu bedarf es einer Relativbewegung zwischen den Schneiden 7 und den Entgratungswerkzeugen 17. Bei dem hier beschriebenen Ausführungsbeispiel wird mittels der Betätigungseinrichtung 39 sichergestellt, dass die zunächst eingefahrenen Drahtbürsten 37 beziehungsweise Entgratungswerkzeuge 17 nicht mit der Oberfläche des Werkstücks in Eingriff treten, sondern dass zunächst die Schneiden 7 Späne abtragen. Erst dann werden die Entgratungswerkzeuge ausgefahren und können zur Entgratung der Werkstückoberfläche herangezogen werden.

Es zeigt sich ohne weiteres, dass auch eine Bewegung der Schneiden 7 denkbar wäre. Diese könnten zunächst so weit ausgefahren werden, dass sie bei einer Rotation des Werkzeugs 1 weiter über dessen äußere Kontur hinausragen, als die Entgratungswerkzeuge beziehungsweise Drahtbürsten. In dieser Funktionsstellung könnte die spanabtragende Bearbeitung eines Werkstücks erfolgen. Wenn diese abgeschlossen ist, könnten die Schneiden eingezogen werden, so dass nun die Entgratungswerkzeuge die Werkstückoberfläche bearbeiten könnten. Wenn also auch diese Funktionsweise des Werkzeugs grundsätzlich denkbar wäre, ist die erstbeschriebene vorzuziehen, weil die Schneiden dann für den Funktionswechsel des Werkzeugs 1 nicht bewegt werden müssen und daher sehr exakt im Grundkörper 3 positioniert werden können. Beim Ein- und Ausfahren der Entgratungswerkzeuge ist es, insbesondere wenn diese als Drahtbürsten ausgebildet sind, nicht von entscheidender Bedeutung, wie weit die Bürsten ausgefahren sind. Entscheidend ist nur, dass sie weiter als die Schneiden 7 über den Grundkörper 3 nach außen ragen, um die Entgratung durchführen zu können.

Beim Entgraten von Werkstücken werden insbesondere Drahtbürsten 37 eingesetzt, deren einzelne Borsten abriebfest beschichtet sind, so dass sich eine hohe Standzeit des Werkzeugs 1 ergibt.

Es zeigt sich im übrigen, dass für die Funktionsweise des Werkzeugs 1 auch anders ausgebildete, der Ansteuerung und dem Antrieb der Entgratungswerkzeuge dienende Betätigungseinrichtungen 39 verwendet werden können, nämlich solche, die die Entgratungswerkzeuge 17 elektromechanisch ein- und ausfahren. Denkbar ist es schließlich auch, die Betätigungseinrichtung 39 drehzahlabhängig zu betätigen, beispielsweise mit Hilfe von bekannten Körpern, die ab einer bestimmten Drehzahl gegen die Kraft einer Feder verlagert werden und damit zu einer Betätigung der Entgratungswerkzeuge 17 herangezogen werden können. Auch in dem Fall ist letztlich eine Funktionsumkehr möglich, also eine Verlagerung der Schneiden gegenüber feststehenden Drahtbürsten. In allen Fällen ist im übrigen eine Kombination der verschiedenen Aktivierungsarten (pneumatisch, hydraulisch, mechanisch durch Fliehkraft, mechanisch mittels eines Elektromagneten) möglich, um eine Relativbewegung zwischen Schneiden und Entgratungswerkzeug zu bewirken.

Nach allem wird deutlich, dass das Werkzeug 1 vorzugsweise mit feststehenden Messerplatten 9 ausgestattet ist. Das heißt jedoch, dass eine Verlagerung der Messerplatten zur genauen Justierung des Werkzeugs 1 möglich ist. Die Entgratungswerkzeuge 17, das heißt die Drahtbürsten 37, sind mit Hilfe einer Betätigungseinrichtung 39 verlagerbar, so dass mittels des Werkzeugs 1 sowohl eine spanabtragende Bearbeitung als auch eine Entgratung von Werkstücken möglich ist. Die für die Bearbeitung von Werkstücken erforderlichen Werkzeuge können damit wesentlich reduziert werden, daher auch der Raumbedarf entsprechender Werkzeugzentren beziehungsweise Bearbeitungszentren.. Das Werkzeug 1 ist dabei einfach aufgebaut und wenig stör- beziehungsweise verschleißabhängig.

Nach allem wird im Übrigen deutlich, dass grundsätzlich die spanende Bearbeitung und die Entgratung in ein und demselben Arbeitsgang durchgeführt werden können. Dies erreicht man dadurch, dass die Entgratungswerkzeuge schon während der spanenden Bearbeitung aktiviert, das heißt ausgefahren, sind.

Diese Bearbeitungsweise ist sehr zeitsparend. Vorteil des oben beschriebenen Verfahrens ist jedoch, dass die beiden Bearbeitungsgänge, spanende Bearbeitung und Entgratung, sich nicht gegenseitig beeinträchtigen.

## Patentansprüche

1. Werkzeug zur spanabtragenden Bearbeitung von Werkstücken, mit einem Grundkörper (3), mindestens einer am Grundkörper (3) befestigten Schneide (7), mit einer Entgratungseinrichtung (15) und mit einer mit der Entgratungseinrichtung zusammenwirkenden Betätigungseinrichtung (39), dadurch gekerimzeichnet, dass die Betätigungseinrichtung (39) gezielt ansteuerbar ist und dass dadurch die Entgratungseinrichtung (15) aus einer ersten in den Grundkörper (3) zurückgezogene Funktionsstellung in eine zweite aus dem Grundkörper (3) ausgefahrene Funktionsstellung verlagerbar ist.

2. Werkzeug nach Anspruch 1, **dadurch gekennzeichnet, dass** die Entgratungseinrichtung (15) mindestens ein Entgratungswerkzeug (17) umfasst.

3. Werkzeug nach Anspruch 1 oder 2, **dadurch gekennzeichnet, dass** die Entgratungseinrichtung (15) eine Drahtbürste (37) umfasst.

4. Werkzeug nach einem der vorhergehenden Ansprüche, **dadurch gekennzeichnet, dass** die Drahtbürste (37) abriebfest beschichtete Borsten umfasst.

5. Werkzeug nach einem der vorhergehenden Ansprüche, **dadurch gekennzeichnet, dass** eine Betätigungseinrichtung (39) vorgesehen ist, mit deren Hilfe eine Relativbewegung zwischen der Schneide (7) und dem Entgratungswerkzeug (17) bewirkt werden kann.

6. Werkzeug nach einem der vorhergehenden Ansprüche, **dadurch gekennzeichnet, dass** die Betätigungseinrichtung (39) hydraulisch, pneumatisch und/oder elektromagnetisch antreibbar ist.

7. Werkzeug nach einem der vorhergehenden Ansprüche, **dadurch gekennzeichnet, dass** die Betätigungseinrichtung (39) mindestens einen Betätigungskolben (41) umfasst.

8. Werkzeug nach einem der vorhergehenden Ansprüche, **dadurch gekennzeichnet, dass** der Betätigungskolben (41) mit dem Entgratungswerkzeug (17) zusammenwirkt.

9. Werkzeug nach einem der vorhergehenden Ansprüche, **dadurch gekennzeichnet, dass** die Schneide Teil einer in den Grundkörper (3) des Werkzeugs (1) einsetzbare Messerplatte (9) ist.

10. Werkzeug nach einem der vorhergehenden Ansprüche, **dadurch gekennzeichnet, dass** das Werkzeug mehrere Schneiden (7,7') aufweist.

11. Werkzeug nach einem der vorhergehenden Ansprüche, **dadurch gekennzeichnet, dass** jeder Schneide (7) ein Entgratungswerkzeug (17) zugeordnet ist.

12. Werkzeug nach einem der vorhergehenden Ansprüche, **dadurch gekennzeichnet, dass** die Ansteuerung, insbesondere die pneumatische Ansteuerung; mehrere Betätigungskolben (41) erfasst.

13. Verfahren zur spanabtragenden Bearbeitung von Werkstücken mit mindestens einer Schneide, die an einem Grundkörper des Werkzeugs befestigt ist, mittels eines Werkzeugs nach einem der Ansprüche 1 bis 12, **gekennzeichnet durch** folgende Schritte:
- spanabtragende Bearbeitung des Werkstücks und
- Entgraten des Werkstücks mit demselben Werkzeug.

14. Verfahren nach Anspruch 13, **dadurch gekennzeichnet, dass** eine Betätigungseinrichtung zur Durchführung einer Relativbewegung zwischen Messerplatte und Entgratungseinrichtung des Werkzeugs aktiviert wird.

15. Verfahren nach einem der Ansprüche 13 oder 14, **dadurch gekennzeichnet, dass** die Entgratungseinrichtung ein Entgratungswerkzeug umfasst, das zur spanenden Bearbeitung des Werkstücks eingefahren und zur Entgratung des Werkstücks ausgefahren wird.

## Claims

1. A tool for chip-removal machining of work pieces, with a body (3), at least one bit (7) fixed to the body (3), with a deburring device (15) and an operating device (39), which co-acts with the deburring device, **characterised in that** the operating device (39) can be purposely controlled and that consequently the deburring device (15) can be moved from a first operating position withdrawn into the body (3) into a second operating position extended from the body (3).

2. A tool according to claim 1, **characterised in that** the deburring device (15) comprises at least one deburring tool (17).

3. A tool according to claim 1 or 2, **characterised in that** the deburring device (15) comprises a wire brush (37).

4. A tool according to one of the preceding claims, **characterised in that** the bristles of the wire brush (37) have an abrasion-resistant coating.

5. A tool according to one of the preceding claims, **characterised in that** it has an operating device (39) by means of which a relative movement can be produced between the bit (7) and the deburring tool (17).

6. A tool according to one of the preceding claims, **characterised in that** the operating device (39) can be hydraulically, pneumatically and/or electromagnetically driven.

7. A tool according to one of the preceding claims, **characterised in that** the operating device (39) comprises at least one operating piston (41).

8. A tool according to one of the preceding claims, **characterised in that** the operating piston (41) co-acts with the deburring tool (17).

9. A tool according to one of the preceding claims, **characterised in that** the bit is part of a cutter plate (9) insertable into the body (3) of the tool (1).

10. A tool according to one of the preceding claims, **characterised in that** the tool has several bits (7, 7').

11. A tool according to one of the preceding claims, **characterised in that** each bit (7) is associated with one deburring device (17).

12. A tool according to one of the preceding claims, **characterised in that** the control, especially pneumatic control, comprises several operating pistons (41).

13. A method of chip-removal machining of work pieces, with at least one bit attached to a body of the tool, by means of a tool, according to one of the claims 1 to 12, **characterised by** the following steps:
- chip-removal machining of the work piece and
- deburring of the work piece with the same tool.

14. A process according to claim 13, **characterised in that** an operating device is activated to perform a relative motion between the cutter plate and the debarring device of the tool.

15. A process according to one of the claims 13 or 14, **characterised in that** the deburring device comprises a deburring toot which is withdrawn for chip-removal machining of the work piece and extended for deburring the work piece.

## Revendications

1. Outil pour l'usinage de pièces par enlèvement de copeaux, comprenant un corps de base (3), au moins une lame (7) fixée au corps de base (3), un dispositif d'ébavurage (15) et un dispositif d'actionnement (39) coopérant avec le dispositif d'ébavurage, **caractérisé en ce que** le dispositif d'actionnement (39) peut être commandé de manière déterminée et **en ce que**, ainsi, le dispositif d'ébavurage (15) peut être déplacé depuis une première position fonctionnelle retirée dans le corps de base (3) dans une seconde position fonctionnelle sortie du corps de base (3).

2. Outil selon la revendication 1, **caractérisé en ce que** le dispositif d'ébavurage (15) comprend au moins un outil d'ébavurage (17).

3. Outil selon la revendication 1 ou 2, **caractérisé en ce que** le dispositif d'ébavurage (15) comprend une brosse métallique (37).

4. Outil selon l'une quelconque des revendications précédentes, **caractérisé en ce que** la brosse métallique (37) comprend des fils ayant un revêtement permettant de résister à l'abrasion.

5. Outil selon l'une quelconque des revendications précédentes, **caractérisé en ce qu'**il est prévu un dispositif de commande (39), à l'aide duquel un mouvement relatif entre la lame (7) et l'outil d'ébavurage (17) peut être exécuté.

6. Outil selon l'une quelconque des revendications précédentes, **caractérisé en ce que** le dispositif d'actionnement (39) peut être entraîné par voie hydraulique, pneumatique et/ou électromagnétique.

7. Outil selon l'une quelconque des revendications précédentes, **caractérisé en ce que** le dispositif d'actionnement (39) comprend au moins un piston d'actionnement (41).

8. Outil selon l'une quelconque des revendications précédentes, **caractérisé en ce que** le piston d'actionnement (41) coopère avec l'outil d'ébavurage (17).

9. Outil selon l'une quelconque des revendications précédentes, **caractérisé en ce que** la lame fait partie d'une plaque porte-lames (9) pouvant être inséré dans le corps de base (3) de l'outil (1).

10. Outil selon l'une quelconque des revendications précédentes, **caractérisé en ce que** l'outil présente plusieurs lames (7, 7').

11. Outil selon l'une quelconque des revendications précédentes, **caractérisé en ce qu'**un outil d'ébavurage (17) est associé à chaque lame (7).

12. Outil selon l'une quelconque des revendications précédentes, **caractérisé en ce que** l'entraînement, en particulier l'entraînement pneumatique, comprend plusieurs pistons d'actionnement (41).

13. Procédé pour l'usinage de pièces par enlèvement de copeaux avec au moins une lame fixée à un corps de base de l'outil, au moyen d'un outil selon l'une quelconque des revendications 1 à 12, **caractérisé par** les étapes suivantes :
- usinage de la pièce par enlèvement de copeaux ; et
- ébavurage de la pièce avec le même outil.

14. Procédé selon la revendication 13, **caractérisé en ce qu'**un dispositif d'actionnement pour l'exécution d'un mouvement relatif entre la plaque porte-lames et le dispositif d'ébavurage de l'outil est activé.

15. Procédé selon l'une des revendications 13 et 14, **caractérisé en ce que** le dispositif d'ébavurage comprend un outil d'ébavurage, qui est rentré pour l'usinage de la pièce par enlèvement de copeaux et qui est sorti pour l'ébavurage de la pièce.
